(19) Europäisches Patentamt
European Patent Office
Office européen des brevets

(11) **EP 3 774 393 B1**

(12) **EUROPEAN PATENT SPECIFICATION**

(45) Date of publication and mention of the grant of the patent:
**19.07.2023 Bulletin 2023/29**

(21) Application number: **19723543.5**

(22) Date of filing: **09.04.2019**

(51) International Patent Classification (IPC):
***B60C 1/00*** *(2006.01)* ***C08L 9/06*** *(2006.01)*

(52) Cooperative Patent Classification (CPC):
(C-Sets available)
**C08L 9/06; B60C 1/0016** (Cont.)

(86) International application number:
**PCT/US2019/026591**

(87) International publication number:
**WO 2019/199835 (17.10.2019 Gazette 2019/42)**

(54) **PROPYLENE-BASED POLYMER ADDITIVES FOR IMPROVED TIRE TREAD PERFORMANCE**

PROPYLENBASIERTE POLYMERADDITIVE FÜR VERBESSERTE REIFENLAUFFLÄCHENLEISTUNG

ADDITIFS DE POLYMÈRE À BASE DE PROPYLÈNE POUR DES PERFORMANCES AMÉLIORÉES DE BANDE DE ROULEMENT DE PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.04.2018 US 201862655977 P**

(43) Date of publication of application:
**17.02.2021 Bulletin 2021/07**

(73) Proprietor: **ExxonMobil Chemical Patents Inc.**
**Baytown, TX 77520 (US)**

(72) Inventors:
- **BLOK, Edward, J.**
  **Huffman, TX 77336 (US)**
- **DIAS, Anthony, J.**
  **Houston, TX 77062 (US)**
- **NGUYEN, Paul, T.Q.**
  **League City, TX 77573 (US)**
- **WURZINGER, Erick, E.**
  **Humble, TX 77346 (US)**
- **TSOU, Andy, H.**
  **Houston, TX 77006 (US)**

(74) Representative: **ExxonMobil Chemical Europe Inc.**
**IP Law Europe**
**Hermeslaan 2**
**1831 Machelen (BE)**

(56) References cited:
**WO-A1-2016/053541** **FR-A1- 2 861 736**
**FR-B1- 2 861 736**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 774 393 B1

(52) Cooperative Patent Classification (CPC): (Cont.)

C-Sets
**C08L 9/06, C08L 9/00, C08L 23/16, C08L 7/00, C08L 57/02, C08K 5/18, C08K 5/548, C08K 3/04, C08K 5/09, C08K 5/47, C08K 3/06, C08K 5/31**

## Description

### FIELD OF THE INVENTION

The present invention relates to propylene-ethylene-diene terpolymers useful as modifiers for tire treads.

### BACKGROUND OF THE INVENTION

The tire tread compound is an important compound in a tire that dictates wear, traction, and rolling resistance. It is a technical challenge to deliver excellent traction, low rolling resistance while providing good tread wear. The challenge lies in the trade-off between wet traction and rolling resistance/tread wear. Raising the compound glass transition temperature (Tg) would provide better wet traction but, at the same time, increase the rolling resistance and tread wear. There are needs to develop a tread compound additive that can provide good wet traction without increasing the rolling resistance and tread wear.

Functionalized SBR (styrene butadiene rubber) is one method to improve this trade-off by improving filler dispersion. Nanoprene™, sub-micron to micron sized gels from Lanxess with cross-linked butadiene cores and acrylic shells, is another additive used to increase the wet traction without affecting rolling resistance. However, Nanoprene can only deliver limited improvement in wet traction.

Related references include U.S. Patent Nos. 8,835,563; 8,501,894; 9,527,993; and 9,273,163. WO2016053541A1 describes an elastomeric composition for a tire tread comprising a styrene / butadiene elastomer, a processing oil, a filler, a curative agent, an antioxidant, and a propylene-ethylene-diene terpolymer, which exhibits an improved balance of wet traction and rolling resistance properties.

### SUMMARY OF THE INVENTION

Described herein is an elastomeric composition comprising, per 100 parts by weight of rubber (phr): about 30 to about 50 phr of polybutadiene having a cis-1,4 linkage content of at least 95%; about 40 to about 60 phr of styrene/butadiene copolymer; about 0 to about 20 phr of natural rubber or polyisoprene; about 0 to about 30 phr of a processing oil; about 10 to about 30 phr of a hydrocarbon resin; about 50 to about 75 phr of a filler; a curative agent; an antioxidant; a silane coupling agent; and about 5 to about 30 phr of a propylene-ethylene-diene terpolymer containing from about 2 wt% to about 30 wt% of ethylene and/or $C_4$-$C_{20}$ $\alpha$-olefins derived units.

Also disclosed is a method of balancing the wet traction performance and rolling resistance in a tire tread comprising combining at least a filler, polybutadiene, a styrene/butadiene copolymer, natural rubber or polyisoprene, and a curative agent with one or more propylene-ethylene-diene terpolymers to form a tire tread; and effecting a cure of the components to form a tire tread; wherein the level of the propylene-ethylene-diene terpolymer(s) relative to the other components, and its comonomer content, can be varied to improve the balance of wet traction and rolling resistance of a tire tread.

### DETAILED DESCRIPTION OF THE INVENTION

This invention is directed to the use of propylene-ethylene-diene terpolymers in tire tread compositions. The propylene-ethylene-diene terpolymers are prepared by polymerizing (i) propylene with (ii) at least one of ethylene and $C_4$-$C_{20}$ $\alpha$-olefins and (iii) one or more dienes such as ethylidene norbornene.

The tire tread composition is an important aspect in a tire that dictates wear, traction, and rolling resistance. It is a technical challenge to deliver excellent traction and low rolling resistance while providing good tread wear. The challenge lies in the trade-off between wet traction and rolling resistance/tread wear. Typically, raising the composition's glass transition temperature (Tg) would provide good wet traction but, at the same time, increase the rolling resistance and tread wear. The embodiments described herein, on the other hand, provide a tread compound additive that can deliver superior wet traction without lowering the rolling resistance and tread wear.

The problem has been approached by developing an additive, a propylene-ethylene-diene terpolymer that increases hysteresis in the wet traction region (0°C) and lowers hysteresis in the rolling resistance region (60°C) without changing the overall compound Tg.

The additive compounding step allows one to address the known deficiencies of polyolefin blends with styrene-butadiene rubber/polybutadiene/natural rubber (SBR/PBD/NR) compositions by concentrating the carbon black and antioxidant in the polyolefin domain to improve abrasion resistance, cure state and UV stability. These deficiencies include poorly vulcanized and poorly reinforced polyolefin domains as curatives and fillers migrate away from the polyolefin due to unfavorable solubility parameter differences. The present embodiments described herein overcome one or more of these deficiencies.

Propylene-ethylene-diene terpolymer

The "propylene-ethylene-diene terpolymer" as used herein may be any polymer comprising propylene and other comonomers. The term "polymer" refers to any carbon-containing compound having repeat units from one or more different monomers. The term "terpolymer" as used herein refers to a polymer synthesized from three different monomers. Terpolymers, in some embodiments, may be produced (1) by mixing all three monomers at the same time or (2) by sequential introduction of the different comonomers. The mixing of comonomers may be done in one, two, or possible three different reactors in series and/or in parallel. Preferably the propylene-ethylene-diene terpolymer comprises (i) propylene-derived units, (ii) $\alpha$-olefin-derived units and (iii) diene-derived units. The propylene-ethylene-diene terpolymer may be prepared by polymerizing (i) propylene with (ii) at least one of ethylene and $C_4$-$C_{20}$ $\alpha$-olefins and (iii) one or more dienes.

The comonomers may be linear or branched. Preferred linear comonomers include ethylene or $C_4$ to $C_8$ $\alpha$-olefins, more preferably ethylene, 1-butene, 1-hexene, and 1-octene, even more preferably ethylene or 1-butene. Preferred branched comonomers include 4-methyl-1-pentene, 3-methyl-1-pentene, and 3,5,5-trimethyl-1-hexene. In one or more embodiments, the comonomers may include styrene.

The dienes may be conjugated or non-conjugated. Preferably, the dienes are non-conjugated. Illustrative dienes may include, but are not limited to, 5-ethylidene-2-norbornene (ENB); 1,4-hexadiene; 5-methylene-2-norbornene (MNB); 1,6-octadiene; 5-methyl-1,4-hexadiene; 3,7-dimethyl-1,6-octadiene; 1,3-cyclopentadiene; 1,4-cyclohexadiene; vinyl norbornene (VNB); dicyclopendadiene (DCPD); and combinations thereof. Preferably, the diene is ENB or VNB. Preferably, the propylene-ethylene-diene terpolymer comprises an ENB content of from 0.5 wt% to 5 wt% based on the weight of the terpolymer, or from 1 wt% to 5 wt%, or from 2 wt% to 4 wt%.

The propylene-ethylene-diene terpolymer may have a propylene amount of from 65 wt% to 95 wt%, or from 70 wt% to 95 wt%, or from 75 wt% to 95 wt%, or from 80 wt% to 95 wt%, or from 83 wt% to 95 wt%, or from 84 wt% to 95 wt%, or from 84 wt% to 94 wt%, or from 75 wt% to 90 wt%, based on the weight of the polymer. The balance of the propylene-ethylene-diene terpolymer comprises at least one of ethylene and $C_4$-$C_{20}$ $\alpha$-olefin and one or more dienes. The $\alpha$-olefin may be ethylene, butene, hexane, or octene. When two or more $\alpha$-olefins are present in the polymer, ethylene and at least one of butene, hexane, or octene are preferred.

Preferably, the propylene-ethylene-diene terpolymer comprises an ethylene content of from 5 wt% to 25 wt% based on the weight of the terpolymer, or from 7.5 wt% to 22.5 wt%.

Preferably, the propylene-ethylene-diene terpolymer comprises from 2 to 30 wt% of $C_2$ and/or $C_4$-$C_{20}$ $\alpha$-olefins based the weight of the propylene-ethylene-diene terpolymer. When two or more of ethylene and $C_4$-$C_{20}$ $\alpha$-olefins are present the combined amounts of these olefins in the polymer is preferably at least 2 wt% and falling within the ranges described herein. Other preferred ranges of the amount of ethylene and/or one or more $\alpha$-olefins include from 2 wt% to 25 wt%.

Preferably, the propylene-ethylene-diene terpolymer comprises a diene content of from 0.2 wt% to 20 wt% based on the weight of the polymer. In one or more embodiments, the propylene-ethylene-diene terpolymer may comprise 5-ethylidene-2-norbornene in an amount of from 0.2 wt% to 20wt%.

The propylene-ethylene-diene terpolymer may have a melt flow rate (MFR, 2.16 kg weight at 230°C), equal to or greater than 0.2 g/10min as measured according to the ASTM D-1238-13. Preferably, the MFR (2.16 kg at 230°C) is from 0.2 g/lOmin to 200 g/lOmin, or from 0.2 g/lOmin to 30 g/lOmin, or from 0.2 g/lOmin to 10 g/lOmin.

The propylene-ethylene-diene terpolymer may have a heat of fusion ($H_f$) determined by the DSC procedure described herein, which is greater than or equal to 0 Joules per gram (J/g) and is equal to or less than 80 J/g.

The crystallinity of the propylene-ethylene-diene terpolymer may be expressed in terms of percentage of crystallinity (i.e., %crystallinity), as determined according to the DSC procedure described herein. The propylene-ethylene-diene terpolymer may have a %crystallinity of from 0% to 40%.

The propylene-ethylene-diene terpolymer preferably may have a single broad melting transition. However, the propylene-ethylene-diene terpolymer may show secondary melting peaks adjacent to the principal peak, but for purposes herein, such secondary melting peaks are considered together as a single melting point, with the highest of these peaks (relative to baseline as described herein) being considered as the melting point of the propylene-ethylene-diene terpolymer.

The propylene-ethylene-diene terpolymer may have a melting point, as measured by the DSC procedure described herein, of equal to or less than 100°C.

The Differential Scanning Calorimetry (DSC) procedure may be used to determine heat of fusion and melting temperature of the propylene-ethylene-diene terpolymer. The method is as follows: approximately 6 mg of material placed in microliter aluminum sample pan. The sample is placed in a Differential Scanning Calorimeter (Perkin Elmer Pyris 1 Thermal Analysis System) and is cooled to -80°C. The sample is heated at 10°C/min to attain a final temperature of 120°C. The sample is cycled twice. The thermal output, recorded as the area under the melting peak of the sample, is a measure of the heat of fusion and may be expressed in Joules per gram of polymer and is automatically calculated

by the Perkin Elmer System. The melting point is recorded as the temperature of the greatest heat absorption within the range of melting of the sample relative to a baseline measurement for the increasing heat capacity of the polymer as a function of temperature.

The propylene-ethylene-diene terpolymer may be a blend of discrete random propylene-ethylene-diene terpolymers as long as the polymer blend has the properties of the propylene-ethylene-diene terpolymer as described herein. The number of propylene-ethylene-diene terpolymers may be three or less, or two or less. In one or more embodiments, the propylene-ethylene-diene terpolymer may include a blend of two propylene-ethylene-diene terpolymers differing in the olefin content, the diene content, or the both. Preparation of such polymer blend may be found in U.S. Publication Nos. 2004/0024146 and 2006/0183861.

The inventive compositions may include the propylene-ethylene-diene terpolymer in an amount of from 5 phr to 40 phr, or from 5 phr to 25 phr, or from 10 phr to 20 phr.

Elastomers

The inventive tire tread compositions also comprise an elastomer. Generally the range of the elastomer is from 5 to 75% by weight of the tire tread composition. Suitable elastomers include, for example, diene elastomers.

"Diene elastomer" is understood to mean, in known manner, an elastomer resulting at least in part (homopolymer or copolymer) from diene monomers (monomers bearing two double carbon-carbon bonds, whether conjugated or not).

A diene elastomer can be "highly unsaturated," resulting from conjugated diene monomers, which have a greater than 50% molar content of units.

According to one aspect, each diene elastomer having a Tg from -75°C to 0°C is selected from the group consisting of styrene-butadiene copolymers, natural polyisoprenes, synthetic polyisoprenes having a cis-1,4 linkage content greater than 95%, styrene/butadiene/isoprene terpolymers and a mixture of these elastomers, and each diene elastomer having a Tg from -110°C to -75°C, preferably from -100°C to -80°C, is selected from the group consisting of polybutadienes having a cis-1,4 linkage content greater than 90% and isoprene/butadiene copolymers comprising butadiene units in an amount equal to or greater than 50%.

In another aspect, each diene elastomer having a Tg from -75°C to -40°C is selected from the group consisting of natural polyisoprenes and synthetic polyisoprenes having a cis-1,4 linkage content greater than 95%, and each diene elastomer having a Tg from -110°C to - 75°C is a polybutadiene having a cis-1,4 linkage content greater than 90%, or greater than 95%.

In one embodiment, the composition comprises a blend of the diene elastomer(s) having a Tg from -75°C to 0°C and each of the diene elastomer(s) having a Tg from -110°C to -75°C.

In one aspect, the composition comprises a blend of at least one of the polybutadienes having a cis-1,4 linkage content greater than 90% with at least one of the natural or synthetic polyisoprenes (having a cis-1,4 linkage content greater than 95%).

In another aspect, the composition comprises a blend of at least one of the polybutadienes having a cis-1,4 linkage content greater than 90% with at least one of the terpolymers of styrene, isoprene and butadiene.

These diene elastomers can be classified into two categories: "essentially unsaturated" or "essentially saturated". The term "essentially unsaturated" is understood to mean generally a diene elastomer resulting at least in part from conjugated diene monomers having a level of units of diene origin (conjugated dienes) which is greater than 15% (mol %); thus it is that diene elastomers such as butyl rubbers or copolymers of dienes and of alpha-olefins of EPDM type do not come within the preceding definition and can in particular be described as "essentially saturated" diene elastomers (low or very low level of units of diene origin, always less than 15%). In the category of "essentially unsaturated" diene elastomers, the term "highly unsaturated" diene elastomer is understood to mean in particular a diene elastomer having a level of units of diene origin (conjugated dienes) which is greater than 50%.

Given these definitions, the term diene elastomer capable of being used herein is understood more particularly to mean: (a) any homopolymer obtained by polymerization of a conjugated diene monomer having from 4 to 12 carbon atoms; (b) any copolymer obtained by copolymerization of one or more conjugated dienes with one another or with one or more vinylaromatic compounds having from 8 to 20 carbon atoms; (c) a ternary copolymer obtained by copolymerization of ethylene and of an alpha-olefin having 3 to 6 carbon atoms with a non-conjugated diene monomer having from 6 to 12 carbon atoms, such as, for example, the elastomers obtained from ethylene and propylene with a non-conjugated diene monomer of the abovementioned type, such as, in particular, 1,4-hexadiene, ethylidenenorbornene or dicyclopentadiene; (d) a copolymer of isobutene and of isoprene (butyl rubber) and also the halogenated versions, in particular chlorinated or brominated versions, of this type of copolymer.

The following are suitable in particular as conjugated dienes: 1,3-butadiene, 2-methyl-1,3-butadiene, 2,3-di($C_1$-$C_5$ alkyl)-1,3-butadienes, such as, for example, 2,3-dimethyl-1,3-butadiene, 2,3-diethyl-1,3-butadiene, 2-methyl-3-ethyl-1,3-butadiene or 2-methyl-3-isopropyl-1,3-butadiene, an aryl-1,3-butadiene, 1,3-pentadiene or 2,4-hexadiene. The following, for example, are suitable as vinylaromatic compounds: styrene, ortho-, meta- or para-methylstyrene, the

"vinyltoluene" commercial mixture, para-(tert-butyl)styrene, methoxystyrenes, chlorostyrenes, vinylmesitylene, divinylbenzene or vinylnaphthalene.

The copolymers can comprise from 99% to 20% by weight of diene units and from 1% to 80% by weight of vinylaromatic units. The elastomers can have any microstructure which depends on the polymerization conditions used, in particular on the presence or absence of a modifying and/or randomizing agent and on the amounts of modifying and/or randomizing agent employed. The elastomers can, for example, be block, random, sequential or microsequential elastomers and can be prepared in dispersion or in solution; they can be coupled and/or star-branched or also functionalized with a coupling and/or star-branching or functionalization agent. Mention may be made, for coupling to carbon black, for example, of functional groups comprising a C--Sn bond or aminated functional groups, such as benzophenone, for example; mention may be made, for coupling to a reinforcing inorganic filler, such as silica, of, for example, silanol or polysiloxane functional groups having a silanol ends, alkoxysilane groups, carboxyl groups, or polyether groups.

The following are suitable: polybutadienes, in particular those having a content (molar %) of 1,2-units of from 4% to 80% or those having a content (molar %) of cis-1,4-units of greater than 80%, polyisoprenes, butadiene/styrene copolymers and in particular those having a Tg (glass transition temperature, measured according to Standard ASTM D3418-15) of from 0°C to -70°C and more particularly from -10°C to -60°C, a styrene content of from 5% to 60% by weight and more particularly from 20% to 50%, a content (molar %) of 1,2-bonds of the butadiene part of from 4% to 75% and a content (molar %) of trans-1,4-bonds of from 10% to 80%, butadiene/isoprene copolymers, in particular those having an isoprene content of from 5% to 90% by weight and a Tg of -40°C to -80°C, or isoprene/styrene copolymers, in particular those having a styrene content of from 5% to 50% by weight and a Tg of from -25°C to -50°C. In the case of butadiene/styrene/isoprene copolymers, those having a styrene content of from 5% to 50% by weight and more particularly of from 10% to 40%, an isoprene content of from 15% to 60% by weight and more particularly from 20% to 50%, a butadiene content of from 5% to 50% by weight and more particularly of from 20% to 40%, a content (molar %) of 1,2-units of the butadiene part of from 4% to 85%, a content (molar %) of trans-1,4-units of the butadiene part of from 6% to 80%, a content (molar %) of 1,2- plus 3,4-units of the isoprene part of from 5% to 70% and a content (molar %) of trans-1,4-units of the isoprene part of from 10% to 50%, and more generally any butadiene/styrene/isoprene copolymer having a Tg of from 0°C to -70°C, are suitable in particular.

The diene elastomer chosen from the group of the highly unsaturated diene elastomers consisting of polybutadienes (abbreviated to "BR"), synthetic polyisoprenes (IR), natural rubber (NR), butadiene copolymers, isoprene copolymers and the mixtures of these elastomers. Such copolymers are more preferably chosen from the group consisting of butadiene/styrene copolymers (SBR), isoprene/butadiene copolymers (BIR), isoprene/styrene copolymers (SIR) and isoprene/butadiene/styrene copolymers (SBIR).

According to a specific embodiment, the diene elastomer is predominantly (i.e., for more than 50 wt%) an SBR, whether an SBR prepared in emulsion ("ESBR") or an SBR prepared in solution ("SSBR"), or an SBR/BR, SBR/NR (or SBR/IR), BR/NR (or BR/IR) or also SBR/BR/NR (or SBR/BR/IR) blend (mixture). In the case of an SBR (ESBR or SSBR) elastomer, use is made in particular of an SBR having a moderate styrene content, for example of from 20% to 35% by weight, or a high styrene content, for example from 35 to 45%, a content of vinyl bonds of the butadiene part of from 15% to 70%, a content (molar %) of trans-1,4-bonds of from 15% to 75% and a Tg of from -10°C to -55°C; such an SBR can advantageously be used as a mixture with a BR preferably having more than 90% (molar %) of cis-1,4-bonds.

The term "isoprene elastomer" is understood to mean, in a known way, an isoprene homopolymer or copolymer, in other words a diene elastomer chosen from the group consisting of natural rubber (NR), synthetic polyisoprenes (IR), the various copolymers of isoprene and the mixtures of these elastomers. Mention will in particular be made, among isoprene copolymers, of isobutene/isoprene copolymers (butyl rubber IM), isoprene/styrene copolymers (SIR), isoprene/butadiene copolymers (BIR) or isoprene/butadiene/styrene copolymers (SBIR). This isoprene elastomer is preferably natural rubber or a synthetic cis-1,4-polyisoprene; use is preferably made, among these synthetic polyisoprenes, of the polyisoprenes having a level (molar %) of cis-1,4-bonds of greater than 90%, more preferably still of greater than 98%.

According to still an7other aspect, the rubber composition comprises a blend of a (one or more) "high Tg" diene elastomer exhibiting a Tg of from -70°C to 0°C and of a (one or more) "low Tg" diene elastomer exhibiting a Tg of from -110°C to -80°C, more preferably from -100°C to -90°C. The high Tg elastomer is preferably chosen from the group consisting of S-SBRs, E-SBRs, natural rubber, synthetic polyisoprenes (exhibiting a level (molar %) of cis-1,4-structures preferably of greater than 95%), BIRs, SIRs, SBIRs and the mixtures of these elastomers. The low Tg elastomer preferably comprises butadiene units according to a level (molar %) at least equal to 70%; it preferably consists of a polybutadiene (BR) exhibiting a level (molar %) of cis-1,4-structures of greater than 90%.

According to another embodiment of the invention, the rubber composition comprises, for example, from 40 to 70 phr (parts by weight per hundred parts of total elastomer) of a high Tg elastomer as a blend with 30 to 50 phr, of a low Tg elastomer; according to another example, it comprises, for the whole of the 100 phr, one or more SBR(s) prepared in solution.

According to another embodiment of the invention, the diene elastomer of the composition according to the

invention comprises a blend of a BR (as low Tg elastomer) exhibiting a level (molar %) of cis-1,4-structures of greater than 90% with one or more S-SBRs or E-SBRs (as high Tg elastomer(s)).

The compositions described herein can comprise a single diene elastomer or a mixture of several diene elastomers, it being possible for the diene elastomer or elastomers to be used in combination with any type of synthetic elastomer other than a diene elastomer, indeed even with polymers other than elastomers, for example thermoplastic polymers.

Useful tire tread compositions can also comprise 15 to 70 wt% of a styrenic copolymer; 0 or 70 wt% of a polybutadiene polymer; 0 to 70 wt% of natural rubber or synthetic polyisoprene; 15 to 70 wt% of a functionalized styrenic copolymer; 0 or 70 wt% of a functionalized polybutadiene polymer; 0 or 70 wt% of natural rubber or functionalized synthetic polyisoprene; 0 or 40 wt% of processing oil; 20 wt% to 60 wt% of filler, especially silica-based filler as described herein; a curative agent; and 5 wt% to 20 wt% of a propylene-ethylene-diene terpolymer described herein, and 0 or 5 wt% to 40 wt% of a hydrocarbon resin, the weight percentages based on the total composition.

Inorganic Filler

The term "filler" as used herein refers to any material that is used to reinforce or modify physical properties, impart certain processing properties, or reduce cost of an elastomeric composition.

Examples of preferred filler include, but are not limited to, calcium carbonate, clay, mica, silica, silicates, talc, titanium dioxide, alumina, zinc oxide, starch, wood flour, carbon black, or mixtures thereof. The fillers may be any size and range, for example in the tire industry, from 0.0001 μm to 100 μm.

As used herein, the term "silica" is meant to refer to any type or particle size silica or another silicic acid derivative, or silicic acid, processed by solution, pyrogenic, or the like methods, including untreated, precipitated silica, crystalline silica, colloidal silica, aluminum or calcium silicates, fumed silica, and the like. Precipitated silica can be conventional silica, semi-highly dispersible silica, or highly dispersible silica. A preferred filler is commercially available by Rhodia Company under the trade name ZEOSIL™ Z1165.

Use may be made of any type of reinforcing filler known for its capabilities of reinforcing a rubber composition which can be used for the manufacture of tires, for example an organic filler, such as carbon black, a reinforcing inorganic filler, such as silica, or a blend of these two types of filler, in particular a blend of carbon black and silica.

All carbon blacks, in particular blacks of the HAF, ISAF or SAF type, conventionally used in tires ("tire-grade" blacks) are suitable as carbon blacks. Mention will more particularly be made, among the latter, of the reinforcing carbon blacks of the 100, 200 or 300 series (ASTM grades), such as, for example, the N115, N134, N234, N326, N330, N339, N347 or N375 blacks, or also, depending on the applications targeted, the blacks of higher series (for example, N660, N683 or N772). The carbon blacks might, for example, be already incorporated in the isoprene elastomer in the form of a masterbatch (see, for example, International Applications WO 97/36724 and WO 99/16600).

The term "reinforcing inorganic filler" should be understood, in the present patent application, by definition, as meaning any inorganic or mineral filler, whatever its color and its origin (natural or synthetic), also known as "white filler", "clear filler" or even "non-black filler", in contrast to carbon black, capable of reinforcing by itself alone, without means other than an intermediate coupling agent, a rubber composition intended for the manufacture of tires, in other words capable of replacing, in its reinforcing role, a conventional tire-grade carbon black; such a filler is generally characterized, in a known way, by the presence of hydroxyl (--OH) groups at its surface.

The physical state under which the reinforcing inorganic filler is provided is not important, whether it is in the form of a powder, of microbeads, of granules, of beads or any other appropriate densified form. Of course, the term reinforcing inorganic filler is also understood to mean mixtures of different reinforcing inorganic fillers, in particular of highly dispersible siliceous and/or aluminous fillers as described below.

Mineral fillers of the siliceous type, in particular silica ($SiO_2$), or of the aluminous type, in particular alumina ($Al_2O_3$), are suitable in particular as reinforcing inorganic fillers. The silica used can be any reinforcing silica known to a person skilled in the art, in particular any precipitated or pyrogenic silica exhibiting a BET surface and a CTAB specific surface both of less than 450 $m^2/g$, preferably from 30 to 400 $m^2/g$. Mention will be made, as highly dispersible ("HDS") precipitated silicas, for example, of the ULTRASIL™ 7000 and ULTRASIL™ 7005 silicas from Degussa, the ZEOSIL™ 1165 MP, C5 MP and 1115 MP silicas from Rhodia, the HI-SIL™ EZ150G silica from PPG, the Zeopol 8715, 8745 and 8755 silicas from Huber or silicas with a high specific surface.

Mention may also be made, as other examples of inorganic filler being capable of being used, of reinforcing aluminum (oxide), hydroxides, titanium oxides or silicon carbides (see, for example, International Applications WO 02/053634 and US 2004/0030017).

When the compositions of the invention are intended for tire treads with a low rolling resistance, the reinforcing inorganic filler used, in particular if it is silica, preferably has a BET surface of from 45 to 400 $m^2/g$, more preferably of from 60 to 300 $m^2/g$.

Preferably, the level of total reinforcing filler (carbon black and/or reinforcing inorganic filler) is from 20 to 200

phr, more preferably from 30 to 150 phr, the optimum being in a known way different depending on the specific applications targeted: the level of the reinforcement expected with regard to a bicycle tire, for example, is, of course, less than that required with regard to a tire capable of running at high speed in a sustained manner, for example, a motor cycle tire, a tire for a passenger vehicle or a tire for a commercial vehicle, such as a heavy duty vehicle.

Coupling Agent

As used herein, the term "coupling agent" is meant to refer to any agent capable of facilitating stable chemical and/or physical interaction between two otherwise non-interacting species, e.g., between a filler and a diene elastomer. Coupling agents cause silica to have a reinforcing effect on the rubber. Such coupling agents may be pre-mixed, or pre-reacted, with the silica particles or added to the rubber mix during the rubber/silica processing, or mixing, stage. If the coupling agent and silica are added separately to the rubber mix during the rubber/silica mixing, or processing stage, it is considered that the coupling agent then combines in situ with the silica.

The coupling agent may be a sulfur-based coupling agent, an organic peroxide-based coupling agent, an inorganic coupling agent, a polyamine coupling agent, a resin coupling agent, a sulfur compound-based coupling agent, oxime-nitrosamine-based coupling agent, and sulfur. Among these, preferred for a rubber composition for tires is the sulfur-based coupling agent.

In an embodiment, the coupling agent is at least bifunctional. Non-limiting examples of bifunctional coupling agents include organosilanes or polyorganosiloxanes. Other examples of suitable coupling agents include silane polysulfides, referred to as "symmetrical" or "unsymmetrical" depending on their specific structure. Silane polysulphides can be described by the formula (V):

$$Z\text{-}A\text{-}S_x\text{-}A\text{-}Z \qquad (V),$$

in which x is an integer from 2 to 8 (preferably from 2 to 5); the A symbols, which are identical or different, represent a divalent hydrocarbon radical (preferably a Ci-Cis alkylene group or a $C_6$-$C_{12}$ arylene group, more particularly a $C_1$-$C_{10}$, in particular $C_1$-$C_4$, alkylene, especially propylene); the Z symbols, which are identical or different, correspond to one of the three formulae (VI):

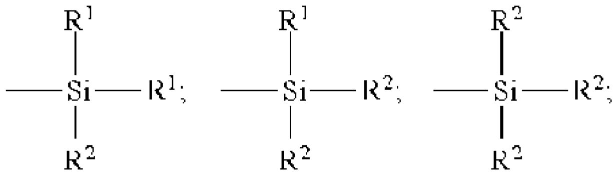
(VI),

in which the $R^1$ radicals, which are substituted or unsubstituted and identical to or different from one another, represent a Ci-Cis alkyl, $C_5$-$C_{18}$ cycloalkyl or $C_6$-$C_{18}$ aryl group (preferably $C_1$-$C_6$ alkyl, cyclohexyl or phenyl groups, in particular $C_1$-$C_4$ alkyl groups, more particularly methyl and/or ethyl); the $R^2$ radicals, which are substituted or unsubstituted and identical to or different from one another, represent a $C_1$-$C_{18}$ alkoxyl or $C_5$-$C_{18}$ cycloalkoxyl group (preferably a group selected from Ci-Cs alkoxyls and $C_5$-$C_8$ cycloalkoxyls, more preferably still a group selected from $C_1$-$C_4$ alkoxyls, in particular methoxyl and ethoxyl).

Non-limiting examples of silane polysulphides include bis(($C_1$-$C_4$)alkoxy($C_1$-$C_4$)alkylsilyl($C_1$-$C_4$)alkyl)polysulphides (in particular disulphides, trisulphides or tetrasulphides), such as, for example, bis(3-trimethoxysilylpropyl) or bis(3-triethoxysilylpropyl)polysulphides. Further examples include bis(3-triethoxysilylpropyl)tetrasulphide, abbreviated to TESPT, of formula $[(C_2H_5O)_3Si(CH_2)_3S_2]_2$, or bis(triethoxysilylpropyl)disulphide, abbreviated to TESPD, of formula $[(C_2H_5O)_3Si(CH_2)_3S]_2$. Other examples include bis(mono($C_1$-$C_4$)alkoxyldi($C_1$-$C_4$)alkylsilylpropyl)polysulphides (in particular disulphides, trisulphides or tetrasulphides), more particularly bis(monoethoxydimethylsilylpropyl)tetrasulphide.

The coupling agent can also be bifunctional POSs (polyorganosiloxanes), or hydroxysilane polysulphides, or silanes or POSs bearing azodicarbonyl functional groups. The coupling agent can also include other silane sulphides, for example, silanes having at least one thiol (-SH) functional group (referred to as mercaptosilanes) and/or at least one masked thiol functional group.

The coupling agent can also include combinations of one or more coupling agents such as those described herein, or otherwise known in the art. A preferred coupling agent comprises alkoxysilane or polysulphurized alkoxysilane. A particularly preferred polysulphurized alkoxysilane is bis(triethoxysilylpropyl) tetrasulphide, which is commercially available by Degussa under the trade name X50S™.

Plasticizer

As used herein, the term "plasticizer" (also referred to as a processing oil), refers to a petroleum derived processing oil and synthetic plasticizer. Such oils are primarily used to improve the processability of the composition. Suitable plasticizers include, but are not limited to, aliphatic acid esters or hydrocarbon plasticizer oils such as paraffinic oils, aromatic oils, naphthenic petroleum oils, and polybutene oils. A particularly preferred plasticizer is naphthenic oil, which is commercially available by Nynas under the trade name NYTEX™ 4700.

MES and TDAE oils are well known to a person skilled in the art; for example, reference is made to publication KGK (Kautschuk Gummi Kunstoffe), 52nd year, No. 12/99, pp. 799-805, entitled "Safe Process Oils for Tires with Low Environmental Impact".

Mention may be made, as examples of MES oils (whether they are of the "extracted" or "hydrotreated" type) or of TDAE oils, for example, of the products sold under the names FLEXON™ 683 by ExxonMobil, VIVATEC™ 200 or VIVATEC™ 500 by H&R European, PLAXOLENE™ MS by Total, or CATENEX™ SNR by Shell.

Other suitable plasticizers for use in the present invention include "triesters" or "fatty acids". Triester and fatty acid generally refer to a mixture of triesters or a mixture of fatty acids, respectively. The fatty acid preferably consists of more than 50%, more preferably to more than 80% by weight of an unsaturated C18 fatty acid, that is to say one selected from among the group consisting of oleic acid, linoleic acid, linolenic acid and mixtures thereof. More preferably, be it synthetic or natural in origin, the fatty acid used is constituted to more than 50% by weight, more preferably still to more than 80% by weight, of oleic acid.

In other words, very particularly a glycerol trioleate, derived from oleic acid and glycerol, is used. Among the preferred glycerol trioleates, mention will be made in particular, as examples of natural compounds, of the vegetable oils sunflower oil or rapeseed oil having a high content of oleic acid (more than 50%, more preferably more than 80% by weight).

The glycerol trimester is used in a preferred amount of between 5 and 80 phr, more preferably of between 10 and 50 phr, in particular within a range from 15 to 30 phr, in particular when the tread of the invention is intended for a passenger-type vehicle. In the light of the present description, the person skilled in the art will be able to adjust this amount of ester as a function of the specific conditions of embodiment of the invention, in particular the amount of inorganic filler used.

The resins (it should be remembered that the term "resin" is reserved by definition for a solid compound) formed of $C_5$ fraction/vinylaromatic copolymer, in particular of $C_5$ fraction/styrene or $C_5$ fraction/$C_9$ fraction copolymer, are well known; they have been essentially used to date for application as tackifying agents for adhesives and paints but also as processing aids in tire rubber compositions.

The $C_5$ fraction/vinylaromatic copolymer is, by definition and in a known way, a copolymer of a vinylaromatic monomer and of a $C_5$ fraction.

Styrene, alpha-methylstyrene, ortho-, meta- or para-methylstyrene, vinyltoluene, para-(tert-butyl)styrene, methoxystyrenes, chlorostyrenes, vinylmesitylene, divinylbenzene, vinylnaphthalene and any vinylaromatic monomer resulting from a $C_9$ fraction (or more generally from a $C_8$ to $C_{10}$ fraction), for example, are suitable as vinylaromatic monomers. Preferably, the vinylaromatic compound is styrene or a vinylaromatic monomer resulting from a $C_9$ fraction (or more generally from a $C_8$ to $C_{10}$ fraction).

In a known way, the term $C_5$ fraction (or, for example, $C_9$ fraction respectively) is understood to mean any fraction resulting from a process resulting from petrochemistry or from the refining of petroleums, any distillation fraction predominantly comprising compounds having 5 (or respectively 9, in the case of a $C_9$ fraction) carbon atoms; the $C_5$ fractions, for example, may comprise, by way of illustration and without limitation, the following compounds, the relative proportions of which may vary according to the process by which they are obtained, for example according to the origin of the naphtha and the steam cracking process: 1,3-butadiene, 1-butene, 2-butenes, 1,2-butadiene, 3-methyl-1-butene, 1,4-pentadiene, 1-pentene, 2-methyl- 1-butene, 2-pentenes, isoprene, cyclopentadiene, which can be present in the form of its dicyclopentadiene dimer, piperylenes, cyclopentene, 1-methylcyclopentene, 1-hexene, methylcyclopentadiene or cyclohexene. These fractions may be obtained by any chemical process known in the petroleum industry and petrochemistry. Mention may be made, as non-limiting examples, of processes for the steam cracking of naphtha or processes for the fluid catalytic cracking of gasolines, it being possible for these processes to be combined with any possible chemical treatment for the conversion of these fractions known to a person skilled in the art, such as hydrogenation and dehydrogenation.

The plasticizing hydrocarbon resins useful in an embodiment of the invention include those that are homopolymers or copolymers of cyclopentadiene (CPD) or dicyclopentadiene (DCPD), homopolymers or copolymers of terpene, homopolymers or copolymers of $C_5$ cut and mixtures thereof.

Such copolymer plasticizing hydrocarbon resins as discussed generally above may include, for example, resins made up of copolymers of (D)CPD/vinyl-aromatic, of (D)CPD/terpene, of (D)CPD/Cs cut, of terpene/vinyl-aromatic, of $C_5$ cut/vinyl-aromatic and of combinations thereof.

Terpene monomers useful for the terpene homopolymer and copolymer resins include alpha-pinene, beta-pinene and limonene. Particular embodiments include polymers of the limonene monomers that include three isomers: the L-limonene (laevorotatory enantiomer), the D-limonene (dextrorotatory enantiomer), or even the dipentene, a racemic mixture of the dextrorotatory and laevorotatory enantiomers.

Examples of vinyl aromatic monomers include styrene, alpha-methylstyrene, ortho, meta-, para-methylstyrene, vinyl-toluene, para-tertiobutylstyrene, methoxystyrenes, chlorostyrenes, vinyl-mesitylene, divinylbenzene, vinylnaphthalene, any vinyl-aromatic monomer coming from the $C_9$ cut (or, more generally, from a $C_8$ to $C_{10}$ cut). Particular embodiments that include a vinyl-aromatic copolymer include the vinyl-aromatic in the minority monomer, expressed in molar fraction, in the copolymer.

Particular embodiments of the present invention include as the plasticizing hydrocarbon resin the (D)CPD homopolymer resins, the (D)CPD/styrene copolymer resins, the polylimonene resins, the limonene/styrene copolymer resins, the limonene/D(CPD) copolymer resins, $C_5$ cut/styrene copolymer resins, $C_5$ cut/C9 cut copolymer resins, and mixtures thereof.

## Antioxidant

As used herein, the term "antioxidant" refers to a chemical that combats oxidative degradation. Suitable antioxidants include diphenyl-p-phenylenediamine and those disclosed in The Vanderbilt Rubber Handbook (1978), Pages 344 to 346. A particularly preferred antioxidant is para-phenylenediamines, which is commercially available by Eastman under the trade name SANTOFLEX™ 6PPD (N-(1,3-Dimethylbutyl)-N'-phenyl-1,4-phenylenediamine).

## Crosslinking Agents, Curatives, Cure Packages, and Curing Processes

The elastomeric compositions and the articles made from those compositions are generally manufactured with the aid of at least one cure package, at least one curative, at least one crosslinking agent, and/or undergo a process to cure the elastomeric composition. As used herein, at least one curative package refers to any material or method capable of imparting cured properties to a rubber as is commonly understood in the industry. A preferred agent is sulfur.

## Processing

These compounds were mixed in suitable mixers, using at least two successive passes well known to the person skilled in the art. The non-productive passes (mixing without crosslinking system) which have mixing at high temperatures between 110°C and 190°C. The non-productive passes are followed by a productive pass where the crosslinking system is added. The temperature for this mixing is typically below 110°C.

The tire tread composition has many desirable properties when the propylene-ethylene-diene terpolymer is present in the compositions. Also, the maximum Energy Loss (Tangent Delta, wherein the slope is zero) of the immiscible polyolefin domain of the cured composition is preferably a temperature within the range from -30 to 10°C. Finally, domains comprising the compatibilizer in the polymer matrix of the other components have sizes that are preferred to be less than 20 microns, more preferably less than 10 microns, and most preferably less than 5 microns; or within a range of from 0.1 or 0.2 or 0.5 or 1.0 microns to 5 or 10 or 20 microns.

The features of the invention are described in the following non-limiting examples.

## EXAMPLES

Two propylene-ethylene-diene terpolymer (PEDM) additives (Table 1) were used in tire tread formulations of the following examples.

### Preparation of amorphous propylene-based copolymers (PEDMs 1 and 2)

Catalyst system: Catalyst precursor was bis((4-triethylsilyl)phenyl)methylene(cyclopentadienyl)(2,7-di-tert-butyl-fluoren-9-yl) hafnium dimethyl. However, other metallocene precursors with good diene incorporation and MW capabilities could also be used.

The activator was dimethylanilinium tetrakis(pentafluorophenyl)borate, but dimethylanilinium-tetrakis(heptafluoronaphthyl)borate and other non-coordinating anion type activators or MAO could also be used.

Copolymer compositions as described above were synthesized as follows. The copolymer compositions were synthesized in a single continuous stirred tank reactor. A mixture containing unreacted monomers and solvent was fed to the reactor as fuel for a polymerization reaction. The polymerization was performed in solution using isohexane as solvent. During the polymerization process, hydrogen addition and temperature control were used to achieve the desired

melt flow rate. The catalyst, activated externally to the reactor, was added as needed in amounts effective to maintain the target polymerization temperature. In the reactor, the copolymer material was produced in the presence of ethylene, propylene, ethylidene norbornene, and a catalyst comprising the reaction product of N,N-dimethylanilinium tetrakis(pentafluorophenyl)borate and [cyclopentadienyl(2,7-di-t-butylfluorenyl)di-p-triethylsilanephenylmethane] hafnium dimethyl.

The copolymer solution emerging from the reactor was quenched and then devolatilized using conventionally known devolatilization methods, such as flashing or liquid phase separation, first by removing the bulk of the isohexane to provide a concentrated solution, and then by stripping the remainder of the solvent in anhydrous conditions using a devolatilizer so as to end up with a molten polymer composition containing less than 0.5 wt% of solvent and other volatiles. The molten polymer composition was advanced by a screw to a pelletizer from which the polymer composition pellets are submerged in water and cooled until solid. The composition of the resulting PEDM terpolymer was determined by $^{1}$H and $^{13}$C-NMR spectroscopy.

$^{1}$H-NMR test method for Propylene Ethylene Diene polymer (PEDM)

For $^{1}$H NMR, sample preparation (polymer dissolution) was performed at 140°C where 20 miligrams of polymer was dissolved in an appropriate amount of solvent to give a final polymer solution volume of 1 ml.

The $^{1}$H solution NMR was performed on a 5mm probe at a field of at least 500 MHz in an ODCB (ortho-dichlorobenzene) and benzene-d6 ($C_6D_6$) mixture (9:1) at 120°C with a flip angle of 30°, 15s delay, and 512 transients. Chemical shifts were referenced to the ODCB peak at 7.22 ppm. Signals were integrated and the 2-ethylidene-5-norbornene (ENB) weight percent was reported.

Calculation of ENB and double bonds was performed as shown below:

$$\text{Imajor= Integral of major ENB species from 5.2-5.4 ppm}$$

$$\text{Iminor= Integral of minor ENB species from 4.6-5.12 ppm}$$

$$\text{Ialiph= (Integral of –CH2– from 0-3 ppm)}$$

$$\text{total= (ENB+EP)}$$

$$\text{total wt = (ENB*120+EP*14)}$$

**Table A: Proton NMR peak assignment for PEDM**

| Peak Assignments | Intensity of species | MOLE % | WEIGHT % |
|---|---|---|---|
| Olef: 5.3 and 5.1 ppm ENB | $ENB= I_{major} + I_{minor}$ | ENB*100/total | ENB*120*100/total wt |
| Aliphatic: 3 - 0 ppm | $EP= (I_{aliph}-11*ENB)/2$ | EP*100 /total | EP*14*100 /total wt |

$^{13}$C-NMR test method for Propylene Ethylene Diene polymer (PEDM)

The $^{13}$C solution NMR was performed on a 10mm cryopprobe of at least 600MHz in an ODCB (ortho-dichlorobenzene) and benzene-d6 ($C_6D_6$) mixture (9:1) at 120°C with a flip angle of 90° and inverse gated decoupling. Sample preparation (polymer dissolution) was performed at 140°C where 0.20 grams of polymer was dissolved in an appropriate amount of solvent to give a final polymer solution volume of 3 ml. Chemical shifts were referenced to the ODCB solvent central peak at 130ppm. $^{13}$C NMR determines the ethylene and propylene composition, not accounting for the ENB present.

Assignments for ethylene-propylene-diene terpolymers are based on Geert van der Velden, Macromolecules, 1983, 16, 85-89, and Kolbert et. al. Journal of Applied Polymer Science, 1999, 71, 523-530.

**Table 1: PEDM formulations**

| **PEDM Formulation** | **$C_3$** (wt%) | **$C_2$** (wt%) | **ENB** (wt%) | **MFR** (g/10 min) |
|---|---|---|---|---|
| PEDM 1 | 7.68 | 19.42 | 2.90 | 7.66 |
| PEDM 2 | 87.04 | 10.30 | 2.66 | 7.13 |

Sample preparation of Compounds

Additive mixing: PEDM 1 and PEDM 2 were compounded with other components to produce PEDM 1 Compound and PEDM 2 Compound. Compound compositions for the PEDM 1 and PEDM 2 Compounds are listed in Tables 2 and 3, respectively. All components are listed in phr, or part per hundred, of polymer unit. These compounds were mixed in suitable mixers, using at least two successive passes well known to the person skilled in the art. The mixing temperatures range between 110°C and 210°C. The duration of the mixing for each of the individual mixing steps is between 1 and 30 minutes depending on desired property.

**Table 2: PEDM 1 Compound formulation**

| **Component*** | **Amount (phr**)** |
|---|---|
| PEDM 1 | 100 |
| Carbon Black | 8 |
| CHIMASSORB® 2020 | 0.8 |
| 388 Super Fine Sulfur | 2.5 |
| Stearic acid | 1 |
| AKRO-ZINC® BAR 25 | 1 |
| * CHIMASSORB® 2020 (high-molecular-weight, hindered amine light stabilizer, available from BASF); AKRO-ZINC® BAR 25 (French process zinc oxide in naphthenic oil, available from Akrochem Corporation); Carbon black Pre 3 avalable from Cabot.<br>* parts by weight per hundred parts of total PEDM 1 | |

**Table 3: PEDM 2 Compound formulation**

| **Component*** | **Amount (phr**)** |
|---|---|
| PEDM 2 | 100 |
| Carbon Black | 2.75 |
| CHIMASSORB® 2020 | 0.8 |
| 388 Super Fine Sulfur | 2.5 |
| X 50S® | 10.5 |
| * X 50S® (bis(triethoxysilylpropyl)tetrasulfide with carbon black, available from Evonik Industries); Carbon Black Pre 3 available from Cabot<br>** parts by weight per hundred parts of total PEDM 2 | |

Silica Tread Compounding

Tread compound formulations for the controls and examples are listed in Tables 4 and 5. All components are listed in phr, or part per hundred, of polymer unit. These compounds were mixed in suitable mixers, using at least two successive passes well known to the person skilled in the art. The non-productive passes (mixing without crosslinking system) which have mixing at high temperatures between 110°C and 190°C. The non-productive passes are followed by a productive pass where the crosslinking system is added. The temperature for this mixing is typically below 110°C.

**Table 4: Tire tread formulations using PEDM 1 Compound and corresponding controls**

| Component* | TT-1** | TT-2** | TT-3** | TT-4** | TT-5** | TT-6** | TT-7** |
|---|---|---|---|---|---|---|---|
| Non-Productive Pass Components | | | | | | | |
| NIPOL® NS 116R | 46.7 | 46.7 | 46.7 | 46.7 | 46.7 | 46.7 | 46.7 |
| ZEOSIL® 1165MP | 67 | 67 | 67 | 67 | 67 | 67 | 67 |
| BUNA® CB 24 | 38.3 | 38.3 | 38.3 | 38.3 | 38.3 | 38.3 | 38.3 |
| SMR™ 20 | 15 | 15 | 15 | 15 | 15 | 15 | 15 |
| ESOREZ™ 5340 | 15 | 15 | 15 | 20 | 20 | 25 | 15 |
| SANTOFLEX™ 6PPD | 2 | 2 | 2 | 2 | 2 | 2 | 2 |
| X 50S® | 10.5 | 10.5 | 10.5 | 10.5 | 10.5 | 10.5 | 10.5 |
| Steric acid | 2.5 | 2.5 | 2.5 | 2.5 | 2.5 | 2.5 | 2.5 |
| PEDM 1 Compound | | 20 | 20 | 20 | 20 | 20 | |
| Productive Pass Components | | | | | | | |
| AKRO-ZINC® BAR 25 | 2 | 2 | 2 | 2 | 2 | 2 | 2 |
| N-cyclohexyl-2-benzothiazyl sulfenamide (CBS) | 1.19 | 1.19 | 1.19 | 1.19 | 1.19 | 1.19 | 1.19 |
| 388 Super Fine Sulfur (new | 1.4 | 1.4 | 1.4 | 1.4 | 1.4 | 1.4 | 1.4 |
| diphenyl guanidine (DPG) | 1.4 | 1.4 | 1.4 | 1.4 | 1.4 | 1.4 | 1.4 |

* NIPOL® NS 116R (styrene butadiene rubber with 21% bound styrene, available from Zeon Corporation); BUNA® CB 24 (neodymium butadiene rubber, available from Arlanxeo); SMR™ 20 (natural polymer of cis-polyisoprene, available from Herman Webber & Co.); ZEOSIL® 1165MP (amorphous precipitated silica, available from Rhodia); ESOREZ™ 5340 (hydrocarbon polymer additive, available from ExxonMobil Chemical Company) It has a softening point of 140°C; NYTEX® 4700 (a high viscosity naphthenic black oil, available from Nynas AB); SANTOFLEX™ 6PPD (N-(1,3-Dimethylbutyl)-N'-phenyl-p-phenylenediamine, available from Eastman Chemical)
* per hundred parts of total rubber (NIPOL® NS 116R + BUNA® CB 24 + SMR™ 20)

**Table 5: Tire tread formulations using PEDM 2 Compound and corresponding controls**

| Component* | TT-8** | TT-9** | TT-10** | TT-11** | TT-12** | TT-13** |
|---|---|---|---|---|---|---|
| Non-Productive Pass Components | | | | | | |
| NIPOL® NS 116R | 55.5 | 55.5 | 47.7 | 47.7 | 47.7 | 55.5 |
| ZEOSIL® 1165MP | 67 | 67 | 67 | 67 | 67 | 67 |
| BUNA® CB 24 | 29.5 | 29.5 | 37.3 | 37.3 | 37.3 | 29.5 |
| SMR™ 20 | 15 | 15 | 15 | 15 | 15 | 15 |
| ESCOREZ 5340 | | 15 | 15 | 15 | 20 | |
| NYTEX® 4700 | 15 | | | | | 15 |
| SANTOFLEX™ 6PPD | 2 | 2 | 2 | 2 | 2 | 2 |
| X 50S® | 10.5 | 10.5 | 10.5 | 10.5 | 10.5 | 10.5 |
| Steric acid | 2.5 | 2.5 | 2.5 | 2.5 | 2.5 | 2.5 |
| PEDM 2 Compound | | | | 20 | 20 | |
| Productive Pass Components | | | | | | |
| AKRO-ZINC® BAR 25 | 2 | 2 | 2 | 2 | 2 | 2 |
| CBS | 1.19 | 1.19 | 1.19 | 1.19 | 1.19 | 1.19 |

(continued)

| Productive Pass Components | | | | | | |
|---|---|---|---|---|---|---|
| 388 Super Fine Sulfur (new | 1.4 | 1.4 | 1.4 | 1.4 | 1.4 | 1.4 |
| DPG | 1.4 | 1.4 | 1.4 | 1.4 | 1.4 | 1.4 |
| ESOREZ™ 5340 (hydrocarbon polymer additive, available from ExxonMobil Chemical Company). It has a softening point of 140°C. Loss Tangent Measurements | | | | | | |

The compounds listed in Tables 4 and 5 were compression molded and cured into pads. Afterward, a rectangular test specimen (12 mm wide & 30 mm long) was died out of the cured pads and mounted in an ARES G2 (Advanced Rheometric Expansion System, TA instruments) for dynamic mechanical testing in torsion rectangular geometry. Though the thickness of the test specimen was around 1.8 mm, the thickness of the specimens varied and was measured manually for each test. A strain sweep at room temperature up to 5.5% strains and at 10 Hz was conducted first followed by a temperature sweep at 4% strain and 10 Hz from -38°C to 100°C at 2°C/min ramp rates. Storage and loss moduli were measured along with the loss tangent values. For better wet traction, it is preferred to have higher loss tangent values at temperatures below 0°C whereas the loss tangent is preferred to be lower at 40°C for better rolling resistance.

Table 6 provides the loss tangent measurements for the tire tread formulations using PEDM 1 Compound (Table 4), and Table 7 provides the same measurements but as a percentage of the control tire tread formulation TT-1.

**Table 6: Loss tangent for tire tread formulations using PEDM 1 Compound**

| Temperature (°C) | TT-1 | TT-2 | TT-3 | TT-4 | TT-5 | TT-6 | TT-7 |
|---|---|---|---|---|---|---|---|
| -16 | 0.606 | 0.657 | 0.656 | 0.656 | 0.650 | 0.668 | 0.596 |
| -14 | 0.573 | 0.667 | 0.665 | 0.659 | 0.651 | 0.665 | 0.561 |
| -12 | 0.540 | 0.675 | 0.670 | 0.665 | 0.658 | 0.665 | 0.528 |
| -10 | 0.508 | 0.673 | 0.661 | 0.674 | 0.665 | 0.668 | 0.496 |
| -8 | 0.478 | 0.653 | 0.633 | 0.676 | 0.668 | 0.672 | 0.466 |
| -6 | 0.451 | 0.614 | 0.589 | 0.666 | 0.658 | 0.674 | 0.439 |
| -4 | 0.426 | 0.564 | 0.538 | 0.639 | 0.632 | 0.668 | 0.414 |
| -2 | 0.402 | 0.513 | 0.487 | 0.597 | 0.589 | 0.650 | 0.391 |
| 0 | 0.381 | 0.465 | 0.440 | 0.548 | 0.541 | 0.619 | 0.369 |
| 2 | 0.362 | 0.423 | 0.401 | 0.500 | 0.489 | 0.578 | 0.352 |
| 4 | 0.344 | 0.387 | 0.367 | 0.454 | 0.443 | 0.533 | 0.335 |
| 6 | 0.328 | 0.356 | 0.337 | 0.412 | 0.402 | 0.487 | 0.321 |
| 8 | 0.314 | 0.329 | 0.311 | 0.377 | 0.365 | 0.443 | 0.307 |
| 10 | 0.302 | 0.307 | 0.291 | 0.345 | 0.335 | 0.405 | 0.296 |
| 40 | 0.205 | 0.185 | 0.178 | 0.182 | 0.174 | 0.188 | 0.205 |

**Table 7: Loss tangent (percent of TT-1) for tire tread formulations using PEDM 1 Compound**

| Temperature (°C) | TT-1 | TT-2 | TT-3 | TT-4 | TT-5 | TT-6 | TT-7 |
|---|---|---|---|---|---|---|---|
| -16 | 100 | 108 | 108 | 108 | 107 | 110 | 98 |
| -14 | 100 | 116 | 116 | 115 | 114 | 116 | 98 |
| -12 | 100 | 125 | 124 | 123 | 122 | 123 | 98 |
| -10 | 100 | 132 | 130 | 133 | 131 | 132 | 98 |
| -8 | 100 | 136 | 132 | 141 | 140 | 141 | 97 |

(continued)

| Temperature (°C) | TT-1 | TT-2 | TT-3 | TT-4 | TT-5 | TT-6 | TT-7 |
|---|---|---|---|---|---|---|---|
| -6 | 100 | 136 | 131 | 148 | 146 | 150 | 97 |
| -4 | 100 | 133 | 126 | 150 | 148 | 157 | 97 |
| -2 | 100 | 128 | 121 | 149 | 147 | 162 | 97 |
| 0 | 100 | 122 | 116 | 144 | 142 | 162 | 97 |
| 2 | 100 | 117 | 111 | 138 | 135 | 160 | 97 |
| 4 | 100 | 112 | 107 | 132 | 129 | 155 | 97 |
| 6 | 100 | 108 | 103 | 125 | 122 | 148 | 98 |
| 8 | 100 | 105 | 99 | 120 | 116 | 141 | 98 |
| 10 | 100 | 102 | 96 | 114 | 111 | 134 | 98 |
| 40 | 100 | 90 | 87 | 89 | 85 | 91 | 100 |

The addition of PEDM 1 to the tread compound improves wet traction (increased loss tangent below 0°C) and improves rolling resistance (decreased loss tangent at 40°C).

Table 8 provides the loss tangent measurements for the tire tread formulations using PEDM 2 Compound (Table 5), and Table 9 provides the same measurements but as a percentage of the control tire tread formulation TT-8.

**Table 8: Loss tangent (∆tangent) for tire tread formulations using PEDM 2 Compound**

| Temperature (°C) | TT-8 | TT-9 | TT-10 | TT-11 | TT-12 | TT-13 |
|---|---|---|---|---|---|---|
| -14 | 0.479 | 0.674 | 0.544 | 0.544 | 0.558 | 0.495 |
| -12 | 0.448 | 0.632 | 0.510 | 0.544 | 0.553 | 0.462 |
| -10 | 0.421 | 0.589 | 0.478 | 0.548 | 0.552 | 0.433 |
| -8 | 0.396 | 0.549 | 0.448 | 0.557 | 0.555 | 0.407 |
| -6 | 0.375 | 0.510 | 0.421 | 0.571 | 0.566 | 0.383 |
| -4 | 0.355 | 0.475 | 0.396 | 0.586 | 0.580 | 0.363 |
| -2 | 0.338 | 0.442 | 0.373 | 0.600 | 0.597 | 0.345 |
| 0 | 0.323 | 0.413 | 0.352 | 0.601 | 0.613 | 0.330 |
| 2 | 0.310 | 0.387 | 0.334 | 0.582 | 0.619 | 0.315 |
| 4 | 0.298 | 0.363 | 0.318 | 0.542 | 0.606 | 0.303 |
| 6 | 0.287 | 0.342 | 0.303 | 0.491 | 0.572 | 0.292 |
| 8 | 0.278 | 0.323 | 0.291 | 0.439 | 0.521 | 0.282 |
| 10 | 0.269 | 0.306 | 0.279 | 0.389 | 0.466 | 0.273 |
| 40 | 0.193 | 0.191 | 0.192 | 0.167 | 0.170 | 0.196 |
| 60 | 0.166 | 0.162 | 0.166 | 0.143 | 0.142 | 0.169 |

**Table 9: Loss tangent (percent of TT-8) for tire tread formulations using PEDM 2 Compound**

| Temperature (°C) | TT-8 | TT-9 | TT-10 | TT-11 | TT-12 | TT-13 |
|---|---|---|---|---|---|---|
| -14 | 100 | 141 | 114 | 114 | 117 | 103 |
| -12 | 100 | 141 | 114 | 121 | 124 | 103 |
| -10 | 100 | 140 | 114 | 130 | 131 | 103 |

(continued)

| Temperature (°C) | TT-8 | TT-9 | TT-10 | TT-11 | TT-12 | TT-13 |
|---|---|---|---|---|---|---|
| -8 | 100 | 138 | 113 | 140 | 140 | 103 |
| -6 | 100 | 136 | 112 | 152 | 151 | 102 |
| -4 | 100 | 134 | 111 | 165 | 163 | 102 |
| -2 | 100 | 131 | 110 | 177 | 177 | 102 |
| 0 | 100 | 128 | 109 | 186 | 190 | 102 |
| 2 | 100 | 125 | 108 | 188 | 200 | 102 |
| 4 | 100 | 122 | 107 | 182 | 203 | 102 |
| 6 | 100 | 119 | 106 | 171 | 199 | 102 |
| 8 | 100 | 116 | 105 | 158 | 188 | 101 |
| 10 | 100 | 114 | 104 | 145 | 173 | 101 |
| 40 | 100 | 99 | 100 | 86 | 88 | 101 |
| 60 | 100 | 98 | 100 | 86 | 85 | 101 |

The addition of PEDM 2 to the tread compound (TT-11 and TT-12) improves wet traction (increased loss tangent at 0°C) and improves rolling resistance (decreased loss tangent at 40°C and 60°C).

Stress/Strain Measurements

Five test specimens were dies out with ASTM D4482 die and conditioned in the lab for 16 hours before testing. Specimens were tested on an Instron 5565 with a long travel mechanical extensometer. The load cell and extensometer were calibrated before each day of testing. Extensometer was calibrated at 20mm as the gauge length. The sample information, operator name, date, lab temperature, and humidity were all recorded. Specimen thickness was measured at three places in the test area, average value is entered when prompted, and lab temperature and humidity are measured. Specimen was carefully loaded in the grips to ensure grips clamp on the specimen symmetrically. The extensometer grips were then attached to the sample in the test area. The test was prompted to start. A pre-load of 0.1N was applied. Testing began with the crosshead moving at 20 inches/minute until a break is detected. Five specimens from each sample were tested and median values were used for reporting.

Table 10 provides the stress/strain measurements for the tire tread formulations using PEDM 1 Compound (Table 4), and Table 11 provides the same measurements but as a percentage of the control tire tread formulation TT-8.

**Table 10: Stress/strain measurements for tire tread formulations using PEDM 1 Compound**

| Property | TT-1 | TT-2 | TT-3 | TT-4 | TT-5 | TT-6 | TT-7 |
|---|---|---|---|---|---|---|---|
| 300% Modulus (MPa) | 14.7 | 14.3 | 14.4 | 13.2 | 13.1 | 12.3 | 14.4 |
| Tensile Strength (MPa) | 21.9 | 19.3 | 20.5 | 20.3 | 19.6 | 20.8 | 21.7 |
| Elongation (%) | 417 | 392 | 405 | 422 | 416 | 464 | 418 |

**Table 11: Stress/strain measurements (percent of TT-1) for tire tread formulations using PEDM 1 Compound**

| Property | TT-1 | TT-2 | TT-3 | TT-4 | TT-5 | TT-6 | TT-7 |
|---|---|---|---|---|---|---|---|
| 300% Modulus (% of TT-1) | 100 | 97 | 98 | 90 | 89 | 84 | 98 |
| Tensile Strength (% of TT-1) | 100 | 88 | 94 | 93 | 89 | 95 | 99 |
| Elongation (% of TT-1) | 100 | 94 | 97 | 101 | 100 | 111 | 100 |

The addition of PEDM 1 improves rolling resistance wet braking trade-off without adversely affecting wear resistance.

Table 10 provides the stress/strain measurements for the tire tread formulations using PEDM 1 Compound (Table 4), and Table 11 provides the same measurements but as a percentage of the control tire tread formulation TT-8.

**Table 12: Stress/strain measurements for tire tread formulations using PEDM 2 Compound**

| Property | TT-8 | TT-9 | TT-10 | TT-11 | TT-12 | TT-13 |
|---|---|---|---|---|---|---|
| 300% Modulus (MPa) | 13 | 14.1 | 13.8 | 15.3 | 14.1 | 12.8 |
| Tensile Strength (MPa) | 17.3 | 20 | 20.3 | 19 | 19.8 | 18 |
| Elongation (%) | 378 | 398 | 414 | 362 | 396 | 410 |

**Table 13: Stress/strain measurements (percent of TT-8) for tire tread formulations using PEDM 2 Compound**

| Property | TT-8 | TT-9 | TT-10 | TT-11 | TT-12 | TT-13 |
|---|---|---|---|---|---|---|
| 300% Modulus (% of TT-8) | 100 | 108 | 106 | 118 | 108 | 98 |
| Tensile Strength (% of TT-8) | 100 | 116 | 117 | 110 | 114 | 104 |
| Elongation (% of TT-8) | 100 | 105 | 110 | 96 | 105 | 108 |

The addition of PEDM 2 (TT-11 and TT-12) to the tread has improved modulus, which indicates enhanced durability and handling.

Also disclosed is the use of the propylene-ethylene-diene terpolymer in a tire tread composition as described.

In the specification and in the claims, the terms "including" and "comprising" are open-ended terms and should be interpreted to mean "including, but not limited to". These terms encompass the more restrictive terms "consisting essentially of" and "consisting of'.

It must be noted that as used herein and in the appended claims, the singular forms "a", "an", and "the" include plural reference unless the context clearly dictates otherwise. As well, the terms "a" (or "an"), "one or more" and "at least one" can be used interchangeably herein. It is also to be noted that the terms "comprising", "including", "characterized by" and "having" can be used interchangeably.

**Claims**

**1.** An elastomeric composition comprising, per 100 parts by weight of rubber (phr):

30 to 50 phr of polybutadiene having a cis-1,4 linkage content of at least 95%;
40 to 60 phr of a styrene/butadiene copolymer;
0 to 20 phr of natural rubber or polyisoprene;
0 to 30 phr of a processing oil;
10 to 30 phr of a hydrocarbon resin;
50 to 75 phr of a filler;
a curative agent;
a silane coupling agent;
an antioxidant; and
5 to 40 phr of a propylene-ethylene-diene terpolymer containing from 2 to 30 wt% of ethylene and/or $C_4$-$C_{20}$ $\alpha$-olefins derived units.

**2.** The elastomeric composition of claim 1, wherein the propylene-ethylene-diene terpolymer is functionalized with bis-[3-(triethoxysilyl)-propyl]-tetrasulfide.

**3.** The elastomeric composition of claim 1, wherein the filler is a silica-based filler.

**4.** The elastomeric composition of claim 1, wherein the filler is a carbon black filler.

**5.** The elastomeric composition of claim 1, wherein the filler is blend of a silica-based filler and a carbon black filler.

6. The elastomeric composition of any preceding claim, wherein the propylene-ethylene-diene terpolymer is present in the amount of 5 phr to 25 phr

7. The elastomeric composition of any preceding claim, wherein the propylene-ethylene-diene terpolymer contains from 0.5 wt% to 5 wt% ethylidene norbornene based on the terpolymer.

8. The elastomeric composition of any preceding claim, wherein the propylene-ethylene-diene terpolymer contains from 5 wt% to 25 wt% ethylene based on the terpolymer

9. The elastomeric composition of any preceding claim, wherein the propylene-ethylene-diene terpolymer contains 65 wt% to 95 wt% propylene based on the terpolymer

10. The elastomeric composition of any preceding claim, wherein the glass transition temperature (Tg) of the propylene-ethylene-diene terpolymer is from 0°C to -60°C

11. The elastomeric composition of any preceding claim, wherein the melt flow rate (MFR) at 2.16 kg weight at 230°C of the propylene-ethylene-diene terpolymer is from about 0.2 to 10 g/10 min.

12. A tire tread composition comprising the elastomeric composition of any preceding claim.

13. An article comprising the tire tread composition of claim 12.

14. A method of making the elastomeric composition of claims 1-11, comprising the steps of:

(a) blending 30 to 50 phr of polybutadiene, 40 to 60 phr of styrene/butadiene copolymer, 0 to 20 phr of natural rubber or polyisoprene, 50 to 75 phr of a filler, 0 to 30 phr of processing oil, 10 to 30 phr of a hydrocarbon resin and 5 to 40 phr of propylene-ethylene diene terpolymer to form a first component at a temperature in the range from 110°C to 200°C;
(b) blending the curative agent with the first component at a temperature in the range of about less than 110°C; and
(c) recovering the elastomeric composition.

15. A method of balancing the wet traction performance and rolling resistance in a tire tread comprising the elastomeric composition of claims 1-11:

combining at least 50 to 75 phr of filler, 30 to 50 phr of polybutadiene, 40 to 60 phr of styrene/butadiene copolymer, 0 to 20 phr of natural rubber or polyisoprene, 10 to 30 phr of a hydrocarbon resin and a curative agent with 5 to 40 phr of one or more of the propylene-ethylene-diene terpolymers to form the tire tread;
effecting a cure of the components to form a tire tread; and
wherein the level of the propylene-ethylene-diene terpolymer(s) relative to the other components, and its comonomer content, can be varied to improve the balance of wet traction and rolling resistance of a tire tread.

## Patentansprüche

1. Elastomerzusammensetzung, die pro 100 Gewichtsteile Kautschuk (phr) enthält:

30 bis 50 phr Polybutadien mit einem Gehalt an cis-1,4-Bindungen von mindestens 95 %;
40 bis 60 phr eines Styrol/Butadien-Copolymers;
0 bis 20 phr Naturkautschuk oder Polyisopren;
0 bis 30 phr eines Weichmacheröls;
10 bis 30 phr eines Kohlenwasserstoffharzes;
50 bis 75 phr eines Füllstoffs,
ein Vulkanisiermittel;
einen Silan-Haftvermittler;
ein Antioxidationsmittel; und
5 bis 40 phr eines Propylen-Ethylen-Dien-Terpolymers, das 2 bis 30 Gew.-% von Ethylen und/oder von $C_4$- bis $C_{20}$- $\alpha$-Olefinen abgeleitete Einheiten enthält.

2. Elastomerzusammensetzung nach Anspruch 1, wobei das Propylen-Ethylen-Dien-Terpolymer mit Bis-[3-(triethoxysilyl)-propyl]-tetrasulfid funktionalisiert ist.

3. Elastomerzusammensetzung nach Anspruch 1, wobei der Füllstoff ein Füllstoff auf Basis von Siliziumdioxid ist.

4. Elastomerzusammensetzung nach Anspruch 1, wobei der Füllstoff ein Rußfüllstoff ist.

5. Elastomerzusammensetzung nach Anspruch 1, wobei der Füllstoff eine Mischung aus einem Füllstoff auf Basis von Siliziumdioxid und einem Rußfüllstoff ist.

6. Elastomerzusammensetzung nach einem der vorhergehenden Ansprüche, wobei das Propylen-Ethylen-Dien-Terpolymer in einer Menge von 5 phr bis 25 phr vorhanden ist.

7. Elastomerzusammensetzung nach einem der vorhergehenden Ansprüche, wobei das Propylen-Ethylen-Dien-Terpolymer 0,5 Gew.-% bis 5 Gew.-% Ethylidennorbornen, bezogen auf das Terpolymer, enthält.

8. Elastomerzusammensetzung nach einem der vorhergehenden Ansprüche, wobei das Propylen-Ethylen-Dien-Terpolymer 5 Gew.-% bis 25 Gew.-% Ethylen, bezogen auf das Terpolymer, enthält.

9. Elastomerzusammensetzung nach einem der vorhergehenden Ansprüche, wobei das Propylen-Ethylen-Dien-Terpolymer 65 Gew.-% bis 95 Gew.-% Propylen, bezogen auf das Terpolymer, enthält.

10. Elastomerzusammensetzung nach einem der vorhergehenden Ansprüche, wobei die Glasübergangstemperatur (Tg) des Propylen-Ethylen-Dien-Terpolymers zwischen 0°C und 60°C liegt.

11. Elastomerzusammensetzung nach einem der vorhergehenden Ansprüche, wobei die Schmelzflussrate (MFR) bei 2,16 kg Gewicht bei 230°C des Propylen-Ethylen-Dien-Terpolymers 0,2 bis 10 g/10 min beträgt.

12. Reifenlaufflächenzusammensetzung, welche die elastomere Zusammensetzung nach einem der vorhergehenden Ansprüche umfasst.

13. Gegenstand, der die Reifenlaufflächenzusammensetzung nach Anspruch 12 umfasst.

14. Verfahren zur Herstellung der Elastomerzusammensetzung nach einem der Ansprüche 1 bis 11, umfassend die folgenden Schritte:

(a) Mischen von 30 bis 50 phr Polybutadien, 40 bis 60 phr Styrol/Butadien-Copolymer, 0 bis 20 phr Naturkautschuk oder Polyisopren, 50 bis 75 phr eines Füllstoffs, 0 bis 30 phr Weichmacheröl, 10 bis 30 phr eines Kohlenwasserstoffharzes und 5 bis 40 phr Propylen-Ethylen-Dien-Terpolymer zur Bildung einer ersten Komponente bei einer Temperatur im Bereich von 110°C bis 200°C;
(b) Mischen des Vulkanisiermittels mit der ersten Komponente bei einer Temperatur im Bereich von etwa weniger als 110°C; und
(c) Gewinnung der Elastomerzusammensetzung.

15. Verfahren zum Ausgleichen der Nass-Traktionsleistung und des Rollwiderstands in einer Reifenlauffläche, die die Elastomerzusammensetzung nach den Ansprüchen 1 bis 11 umfasst:

Zusammenfügen von mindestens 50 bis 75 phr Füllstoff, 30 bis 50 phr Polybutadien, 40 bis 60 phr Styrol/Butadien-Copolymer, 0 bis 20 phr Naturkautschuk oder Polyisopren, 10 bis 30 phr eines Kohlenwasserstoffharzes und ein Vulkanisiermittel mit 5 bis 40 phr eines oder mehrerer der Propylen-Ethylen-Dien-Terpolymere zur Bildung der Reifenlauffläche;
Vulkanisieren der Komponenten zur Bildung einer Reifenlauffläche; und
wobei der Anteil des Propylen-Ethylen-Dien-Terpolymers bzw. der Propylen-Ethylen-Dien-Terpolymere im Verhältnis zu den anderen Komponenten und sein Comonomer-Gehalt variiert werden können, um das Gleichgewicht von Nass-Traktion und Rollwiderstand einer Reifenlauffläche zu verbessern.

## Revendications

1. Composition élastomérique comprenant, par 100 parties en poids de caoutchouc (phr) :

   30 à 50 phr de polybutadiène ayant une teneur en liaisons cis-1,4 d'au moins 95 % ;
   40 à 60 phr d'un copolymère de styrène/butadiène ;
   0 à 20 phr d'un caoutchouc naturel ou d'un polyisoprène ;
   0 à 30 phr d'une huile de traitement ;
   10 à 30 phr d'une résine d'hydrocarbure ;
   50 à 75 phr d'une charge ;
   un agent de durcissement ;
   un agent de couplage de type silanes ;
   un antioxydant ; et
   5 à 40 phr d'un terpolymère de propylène-éthylène-diène contenant de 2 à 30 % en poids de motifs issus de l'éthylène et/ou d'$\alpha$-oléfines en $C_{4-20}$.

2. Composition élastomérique selon la revendication 1, le terpolymère de propylène-éthylène-diène étant fonctionnalisé par le bis-[3-(triéthoxysilyl)-propyl]-tétrasulfure.

3. Composition élastomérique selon la revendication 1, la charge étant une charge à base de silice.

4. Composition élastomérique selon la revendication 1, la charge étant une charge de noir de carbone.

5. Composition élastomérique selon la revendication 1, la charge étant un mélange d'une charge à base de silice et d'une charge de noir de carbone.

6. Composition élastomérique selon une quelconque revendication précédente, le terpolymère de propylène-éthylène-diène étant présent en la quantité de 5 phr à 25 phr.

7. Composition élastomérique selon une quelconque revendication précédente, le terpolymère de propylène-éthylène-diène contenant de 0,5 % en poids à 5 % en poids d'éthylidène norbornène sur la base du terpolymère.

8. Composition élastomérique selon une quelconque revendication précédente, le terpolymère de propylène-éthylène-diène contenant de 5 % en poids à 25 % en poids d'éthylène sur la base du terpolymère.

9. Composition élastomérique selon une quelconque revendication précédente, le terpolymère de propylène-éthylène-diène contenant 65 % en poids à 95 % en poids de propylène sur la base du terpolymère.

10. Composition élastomérique selon une quelconque revendication précédente, la température de transition vitreuse (Tg) du terpolymère de propylène-éthylène-diène étant de 0 °C à -60 °C.

11. Composition élastomérique selon une quelconque revendication précédente, l'indice de fluidité à chaud (MFR) à un poids de 2,16 kg à 230 °C du terpolymère de propylène-éthylène-diène étant de 0,2 à 10 g/10 min.

12. Composition de bande de roulement de pneu comprenant la composition élastomérique selon une quelconque revendication précédente.

13. Article comprenant la composition de bande de roulement de pneu selon la revendication 12.

14. Procédé de fabrication de la composition élastomérique selon les revendications 1 à 11, comprenant les étapes de:

   (a) mélange de 30 à 50 phr de polybutadiène, 40 à 60 phr d'un copolymère de styrène/butadiène, 0 à 20 phr de caoutchouc naturel ou de polyisoprène, 50 à 75 phr d'une charge, 0 à 30 phr d'une huile de traitement, 10 à 30 phr d'une résine d'hydrocarbure et 5 à 40 phr de terpolymère de propylène-éthylène-diène pour former un premier composant à une température dans la plage de 110 °C à 200 °C ;
   (b) mélange de l'agent de durcissement avec le premier composant à une température dans la plage d'environ moins de 110 °C ; et
   (c) récupération de la composition élastomérique.

**15.** Procédé pour équilibrer la performance de traction humide et la résistance au roulement dans une bande de roulement de pneu comprenant la composition élastomérique selon les revendications 1 à 11 :

combinaison d'au moins 50 à 75 phr d'une charge, 30 à 50 phr de polybutadiène, 40 à 60 phr de copolymère de styrène/butadiène, 0 à 20 phr de caoutchouc naturel ou de polyisoprène, 10 à 30 phr d'une résine d'hydrocarbure et d'un agent de durcissement avec 5 à 40 phr d'un ou plusieurs parmi les terpolymères de propylène-éthylène-diène pour former la bande de roulement de pneu ;
réalisation d'un durcissement des composants pour former une bande de roulement de pneu ; et
le taux des terpolymère(s) de propylène-éthylène diène par rapport aux autres composants, et sa teneur en comonomère, pouvant être modifiés pour améliorer l'équilibre de traction humide et de résistance au roulement d'une bande de roulement de pneu.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 8835563 B
- US 8501894 B
- US 9527993 B
- US 9273163 B
- WO 2016053541 A1
- US 20040024146 A
- US 20060183861 A
- WO 9736724 A
- WO 9916600 A
- WO 02053634 A
- US 20040030017 A


### Non-patent literature cited in the description


- Safe Process Oils for Tires with Low Environmental Impact. Kautschuk Gummi Kunstoffe, vol. 12, 799-805
- The Vanderbilt Rubber Handbook. 1978, 344-346
- **GEERT VAN DER VELDEN.** *Macromolecules,* 1983, vol. 16, 85-89
- **KOLBERT.** *Journal of Applied Polymer Science,* 1999, vol. 71, 523-530